# EUROPEAN PATENT APPLICATION

(11) **EP 3 016 106 A1**
(43) Date of publication of application: **04.05.2016**
(21) Application number: 14306707.2
(22) Date of filing: 27.10.2014
(51) Int. Cl.: G11B 27/34, G06F 3/0481, H04N 5/232

(54) **Method and apparatus for preparing metadata for review**

(71) Applicant: Thomson Licensing, 92130 Issy-les-Moulineaux (FR)
(72) Inventor: Drexler, Michael, 30989 Gehrden (DE); Brune, Thomas, 30449 Hannover (DE)
(74) Representative: Schmidt-Uhlig, Thomas

(57) **Abstract**

A method for preparing two or more sets of metadata for review and an apparatus (20) configured to perform the method are described. The apparatus (20) comprises a timing information evaluating unit (22), which arranges (10) the two or more sets of metadata along a common timeline. A coordinates evaluation unit (23) combines (11) the two or more sets of metadata using a global coordinate system. A graphic unit (24) then provides (12) a visual representation of the two or more sets of metadata based on the common timeline and the global coordinate system.

## Description

### FIELD OF THE INVENTION

The invention relates to a method and an apparatus for preparing metadata for review. More specifically, a method and an apparatus for preparing two or more sets of metadata for a visual review are described.

### BACKGROUND OF THE INVENTION

On modern film sets more and more metadata are captured beside video and audio. These metadata range from simple script notes over camera and lens metadata to complex geometry and position data and movement of objects or person. It is very helpful to get all these metadata to postproduction in order to aid visual effects. Most of the metadata are provided as simple text files, which are hard to check in a reasonable amount of time. Therefore, the obtained metadata are often not checked on-set. However, as it is usually not possible to retrieve correct metadata at a later stage, it would be desirable to enable an on-set check of the metadata.

### SUMMARY OF THE INVENTION

It is an object of the present invention to propose a solution for preparing metadata for review, which enables an on-set check of the metadata.

According to the invention, a method for preparing two or more sets of metadata for review comprises:
- arranging the two or more sets of metadata along a common timeline;
- combining the two or more sets of metadata using a global coordinate system; and
- providing a visual representation of the two or more sets of metadata based on the common timeline and the global coordinate system.

Accordingly, a computer readable storage medium has stored therein instructions enabling preparing two or more sets of metadata for review, which when executed by a computer, cause the computer to:
- arrange the two or more sets of metadata along a common timeline;
- combine the two or more sets of metadata using a global coordinate system; and
- provide a visual representation of the two or more sets of metadata based on the common timeline and the global coordinate system.

Also, in one embodiment an apparatus configured to prepare two or more sets of metadata for review comprises:
- a timing information evaluating unit configured to arrange the two or more sets of metadata along a common timeline;
- a coordinates evaluation unit configured to combine the two or more sets of metadata using a global coordinate system; and
- a graphic unit configured to provide a visual representation of the two or more sets of metadata based on the common timeline and the global coordinate system.

In another embodiment, an apparatus configured to prepare two or more sets of metadata for review comprises a processing device and a memory device having stored therein instructions, which, when executed by the processing device, cause the apparatus to:
- arrange the two or more sets of metadata along a common timeline;
- combine the two or more sets of metadata using a global coordinate system; and
- provide a visual representation of the two or more sets of metadata based on the common timeline and the global coordinate system.

According to the invention, captured metadata of independent sources, e.g. geometry sensors like localization or position or inertial sensors as well as various device settings, are displayed in a combined meaningful visual representation. The advantage is that the user is able to check the quality, consistency, and meaningfulness of the captured metadata at a glance in a convenient and time-saving way. Instead of checking all the single metadata files, only one visual representation has to be checked.

In one embodiment, the sets of metadata are arranged along a common timeline using timecodes or starting points comprised in the sets of metadata. This allows synchronizing all sensor systems to a same time reference, which supports a meaningful combination of the sets of metadata.

In one embodiment, the sets of metadata are combined by translating local coordinate systems of the sets of metadata into the global coordinate system and/or setting a set of metadata without a coordinate system or with an unresolved coordinate system in relation with another set of metadata with a resolved coordinate system. Translating several local coordinate systems into a global coordinate system makes it easier for the user to assess the sets of metadata. In addition, unresolved or missing local coordinate systems of certain sensors may be resolved when they are considered in combination with metadata from other sensors with resolved coordinate systems.

In one embodiment the visual representation is a "metadata movie", i.e. a temporal sequence that is rendered out of several captured metadata sets. Alternatively, several captured metadata sets are rendered in real-time displaying a certain instant.

Preferably, metadata entries of past instants are displayed in the visual representation of metadata entries of a current instant. The past entries form a line in the visual representation, which makes it easier to assess the temporal evolution of the visual representation. In this case it is helpful for the user if the metadata entries of the current instant are visually highlighted.

The proposed solution is especially advantageous for the on-set evaluation of metadata obtained during a video shot. For example, it is helpful if the director of photography or on-set data wranglers have quick and direct access to the metadata immediately after a shot to evaluate the quality of the capture. In such type of application the sets of metadata comprise, for example, information about a position of a camera or an object captured by a camera, information about an orientation of a camera, or information about settings of a lens and/or a camera. Advantageously, the visual representation further comprises an indication of a valid viewing area of a camera. For this purpose some of the metadata is interpreted to give the reviewer, e.g. the director of photography, some support by a very convenient visualization.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: schematically illustrates a method according to the invention for preparing two or more sets of metadata for review;
- Fig. 2: schematically depicts a first embodiment of an apparatus configured to perform a method according to the invention;
- Fig. 3: schematically illustrates a second embodiment of an apparatus configured to perform a method according to the invention;
- Fig. 4: shows a visual representation of the captured metadata shortly after beginning of a video shot;
- Fig. 5: shows a visual representation of the captured metadata at the end of the video shot;
- Fig. 6: depicts a viewing direction of a camera as a function of time;
- Fig. 7: shows a bird's eye view of the camera's depth of field;
- Fig. 8: depicts a first instant of a multi-sensor capture in a combined visual representation; and
- Fig. 9: depicts a second instant of a multi-sensor capture in a combined visual representation.

### DETAILED DESCRIPTION OF PREFERRED EMBODIMENTS

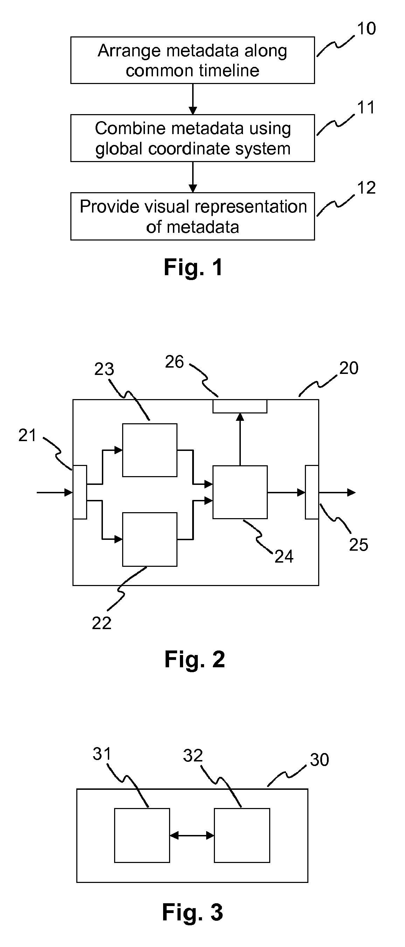

A method according to the invention for preparing two or more sets of metadata for review is schematically illustrated in Fig. 1. After receiving the two or more sets of metadata, e.g. from a network or from a variety of sensors, the two or more sets of metadata are arranged 10 along a common timeline. Then the two or more sets of metadata are combined 11 using a global coordinate system. Of course, these two steps may likewise be performed simultaneously or in reverse order. Finally, a visual representation of the two or more sets of metadata is provided 12 based on the common timeline and the global coordinate system.

Fig. 2 depicts a first embodiment of an apparatus 20 configured to perform a method according to the invention. The apparatus 20 comprises an input 21 for receiving two or more sets of metadata, e.g. from a network or from a variety of sensors. A timing information evaluating unit 22 arranges 10 the two or more sets of metadata along a common timeline. A coordinates evaluation unit 23 combines 11 the two or more sets of metadata using a global coordinate system. In Fig. 2 the timing information evaluating unit 22 and the coordinates evaluation unit 23 operate in parallel. Of course, they may likewise operate sequentially. Finally, a graphic unit 24 provides 12 a visual representation of the two or more sets of metadata based on the common timeline and the global coordinate system. This visual representation is either made available via an output 25 or presented on a display 26. The various elements 22, 23, 24 of the apparatus 20 are either implemented as dedicated hardware or as software running on a processor. They may also be fully or partly combined in a single unit. Also, the input 21 and the output 25 may be combined into a single bidirectional interface.

Another embodiment of an apparatus 30 configured to perform the method according to the invention is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

In the following the proposed solution shall be described through the example of metadata captured on-set during video production. Of course, the solution is not limited to this application. It may likewise be used with metadata stemming from other sources, e.g. microphones used for capturing an audio sequence. For example, during dubbing of 3D audio data stemming from several microphones it is beneficial to provide a visual representation of the available metadata.

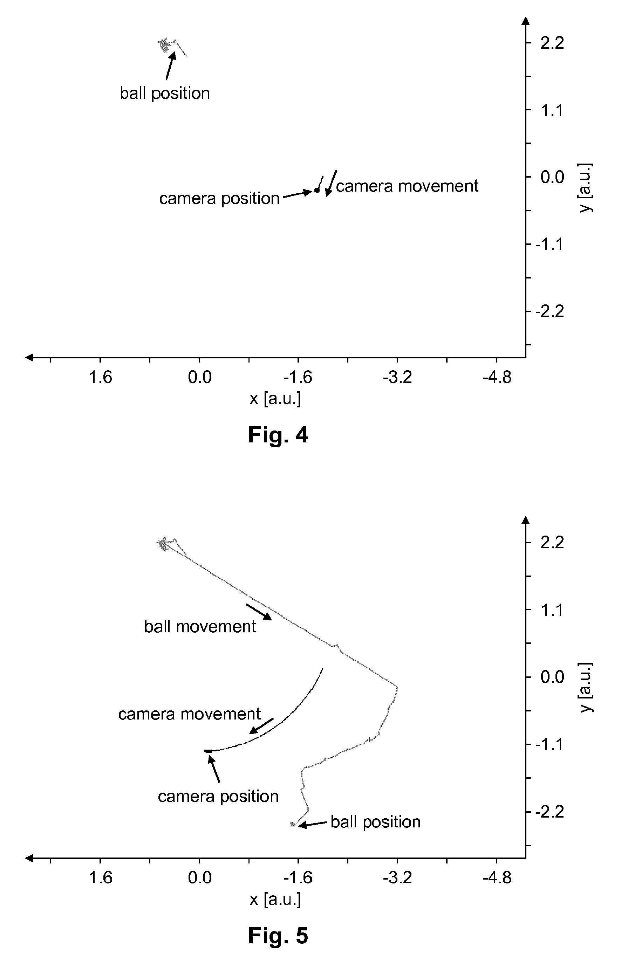

Figs. 4 to 9 show an example of the proposed visual combination of metadata. A simple scene with one actor and a ball was recorded with one moving camera. Several sensor systems were installed to capture metadata in addition to the video. For this purpose markers were fixed to the ball and to the camera. Using these markers the related position tracking system captured the movement of the ball and the camera. Of course, the proposed solution is likewise capable of handling multiple cameras and lenses.

Figs. 4 and 5 depict the visual representation of the captured metadata in a snapshot shortly after beginning and at the end of the shot, respectively. In this example the visual representation uses a bird's eye view. Of course, other 2D perspectives as well as 3D representations can be used as well. The entire visual representation is a function over time and may be watched like a movie.

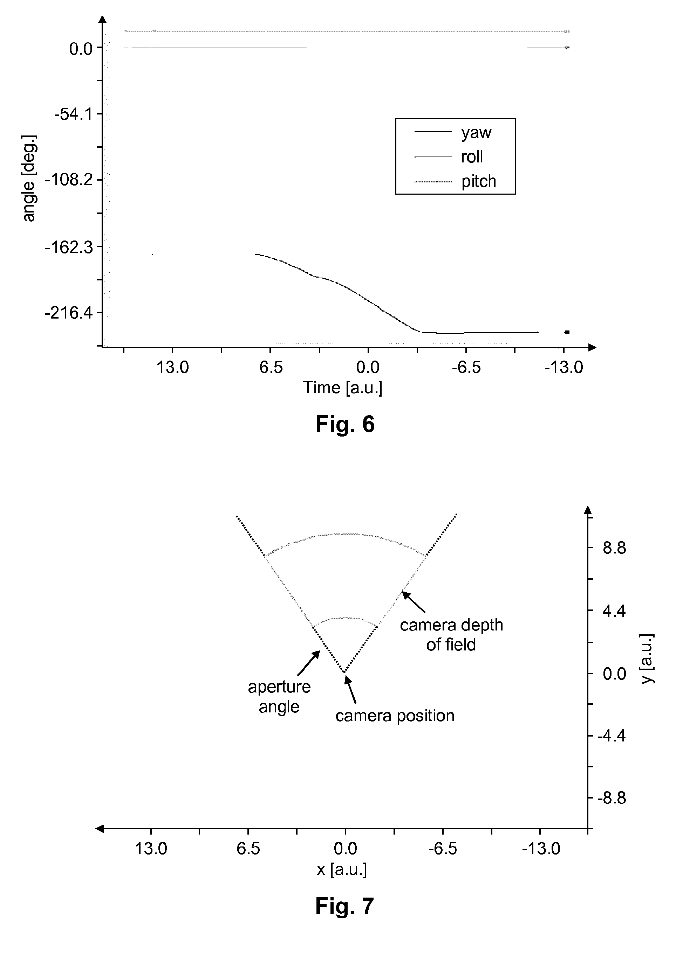

In addition to the marker an inertial sensor was installed in the camera. The sensor captured the orientation of the camera compared to the magnetic north, which allows determining the viewing direction of the camera. Fig. 6 depicts the viewing direction of the camera as a function of time, in which camera roll, pitch, and yaw are shown.

The camera and the lens system further deliver internal metadata of the camera and the lens. With the information of "focal length", "focus distance" and "aperture", the region of sharp focus of the camera, i.e. the depth of field, can be determined. Fig. 7 shows a bird's eye view of this depth of field for a given time.

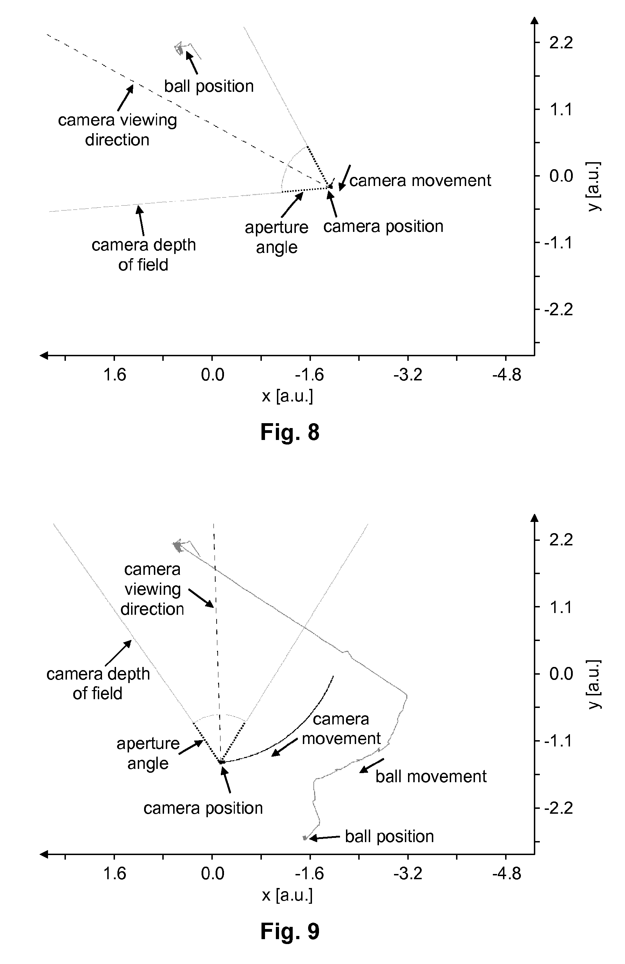

When the relevant metadata information of these three sensor systems are combined, a single visual representation of the shot can be rendered. The resulting "metadata movie" shows the quality of the captured metadata, i.e. if the sensors were initialized properly, or if physical limits of the sensors were exceeded. Figs. 8 and 9 depict two instants of a multi-sensor capture in a combined visual representation.

One principle for combining geometry-related metadata is to combine or even composite local coordinate systems into one global coordinate system for every instant of a timeline. For this purpose all sensor systems need to be synchronized to a same time reference, e.g. using a same time code or by definition of a same starting point.

As can be seen from Figs. 4 and 5 a typical representation of geometry tracking sensors results in visual point entries. The representation may further result in a "viewing angle/axis" within a global coordinate system, as depicted in Figs. 8 and 9. Preferably, point entries of past instants remain visible and hence form a line in the visual representation. In this case it is helpful for the user if the point entry of the current instant is visually highlighted.

As is apparent from Figs. 8 and 9, the lens metadata are transferred into geometry values, and thus into a local coordinate system. The lens metadata representation results in an area within the global visual representation corresponding to a "valid viewing area" of the camera, i.e. an area within an aperture angle of the camera and within the depth of field of the camera. This area is preferably displayed only for the current instant. The visual combination of the metadata obtained with the geometry tracking sensors and the lens metadata over time provides the advantage that metadata of the geometry tracking sensors inside or outside the "valid viewing area" can be extracted or visualized at a glance instantly and at any time. This allows the user to easily check whether there are inconsistencies between the "valid viewing area" of a camera and the objects that should be captured by this camera. An additional beneficial aspect is that unresolved local coordinate systems of certain sensors may be resolved when they are considered in combination with metadata from other sensors with resolved coordinate systems. The visualization of the metadata as a "metadata movie" can be further enhanced. From the available metadata, exact information on the depth of field of the camera and the captured objects can be derived for each instant of time. A warning may be automatically generated if at any instant a captured object is located outside the "valid viewing area", without the need to visually inspect the whole metadata movie. In case of a warning only the affected sequences would need to be inspected.

## Claims

1. A method for preparing two or more sets of metadata for review, the method comprising:
- arranging (10) the two or more sets of metadata along a common timeline;
- combining (11) the two or more sets of metadata using a global coordinate system; and
- providing (12) a visual representation of the two or more sets of metadata based on the common timeline and the global coordinate system.

2. The method according to claim 1, wherein the sets of metadata are arranged (10) along a common timeline using timecodes or starting points comprised in the sets of metadata.

3. The method according to claim 1 or 2, **wherein** the sets of metadata are combined (11) by translating local coordinate systems of the sets of metadata into the global coordinate system and/or setting a set of metadata without a coordinate system or with an unresolved coordinate system in relation with another set of metadata with a resolved coordinate system.

4. The method according to one of the preceding claims, **wherein** at least one set of metadata comprises information about a position of a camera or an object captured by a camera.

5. The method according to one of the preceding claims, **wherein** at least one set of metadata comprises information about an orientation of a camera.

6. The method according to one of the preceding claims, **wherein** at least one set of metadata comprises information about settings of a lens and/or a camera.

7. The method according to claim 6, **wherein** the visual representation comprises an indication of a valid viewing area of a camera.

8. The method according to one of the preceding claims, **wherein** the visual representation is provided as a temporal sequence of metadata entries.

9. The method according to one of the preceding claims, **wherein** metadata entries of past instants are displayed in the visual representation of metadata entries of a current instant.

10. The method according to claim 9, **wherein** the metadata entries of the current instant are highlighted.

11. A computer readable storage medium having stored therein instructions enabling preparing two or more sets of metadata for review, which when executed by a computer, cause the computer to:
- arrange (10) the two or more sets of metadata along a common timeline;
- combine (11) the two or more sets of metadata using a global coordinate system; and
- provide (12) a visual representation of the two or more sets of metadata based on the common timeline and the global coordinate system.

12. An apparatus (20) configured to prepare two or more sets of metadata for review, the apparatus (20) **comprising:**
- a timing information evaluating unit (22) configured to arrange (10) the two or more sets of metadata along a common timeline;
- a coordinates evaluation unit (23) configured to combine (11) the two or more sets of metadata using a global coordinate system; and
- a graphic unit (24) configured to provide (12) a visual representation of the two or more sets of metadata based on the common timeline and the global coordinate system.

13. An apparatus (30) configured to prepare two or more sets of metadata for review, the apparatus (30) comprising a processing device (31) and a memory device (32) having stored therein instructions, which, when executed by the processing device (31), cause the apparatus (30) to:
- arrange (10) the two or more sets of metadata along a common timeline;
- combine (11) the two or more sets of metadata using a global coordinate system; and
- provide (12) a visual representation of the two or more sets of metadata based on the common timeline and the global coordinate system.
